# EUROPÄISCHE PATENTANMELDUNG

(11) **EP 1 361 772 A1**
(43) Veröffentlichungstag der Anmeldung: **12.11.2003**
(21) Anmeldenummer: 02010435.2
(22) Anmeldetag: 08.05.2002
(51) Int. Cl.: H04Q 7/38

(54) **Verfahren zum Registrieren eines mobilen Kommunikationsgerätes für einen Funkversorgungsbereich eines Mobilfunksystems und entsprechendes Mobilfunksystem**

(71) Anmelder: SIEMENS AKTIENGESELLSCHAFT, 80333 München (DE)
(72) Erfinder: Gessner, Christina, 81373 München (DE); Hofmann, Jürgen, 86504 Merching (DE); Schniedenharn, Joerg, 13587 Berlin (DE); Traynard, Jean-Michel, 81667 München (DE); Ulrich, Thomas, 67098 Bad Duerkheim (DE); Vesely, Alexander, 1170 Wien (AT); von Brandt, Achim, 81929 München (DE)

(57) **Zusammenfassung**

Ein Mobilfunksystem weist Funkversorgungsbereiche 1 .. 4 auf, die je einer Basisstation BS1 ... 4 zugeordnet sind, wobei jeweils mehrere der Basisstationen einem sie steuernden Funknetzwerkcontroller RNC, SRNC zugeordnet sind. Das Verfahren sieht vor, dass ein mobiles Kommunikationsgerät MS eine Registrierung für einen ersten Funkversorgungsbereich 1 bei einem der Funknetzwerkcontroller SRNC beantragt. Der Funknetzwerkcontroller lehnt mangels Berechtigung die beantragte Registrierung ab. Unmittelbar im Anschluss beantragt das Kommunikationsgerät beim Funknetzwerkcontroller die Registrierung für einen zweiten Funkversorgungsbereich 2. Der Funknetzwerkcontroller führt die gewünschte Registrierung durch, da das Kommunikationsgerät zu dieser berechtigt ist.

## Beschreibung

Die Erfindung betrifft ein Verfahren zum Registrieren eines mobilen Kommunikationsgerätes für einen Funkversorgungsbereich eines Mobilfunksystems sowie ein entsprechendes Mobilfunksystem.

In Mobilfunksystemen erfolgt eine Kommunikation zwischen mobilen Teilnehmern und Basisstationen des Mobilfunksystems über elektromagnetische Wellen. In Europa ist als zweite Generation eines Mobilfunksystems das GSM-System verbreitet. In den nächsten Jahren ist mit der Einführung von Mobilfunksystemen der dritten Generation zu rechnen. Der entsprechende UMTS-Standard wird von der 3GPP (Third Generation Partnership Project) standardisiert. Im sogenannten RRC connected mode befindet sich nach dem UMTS-Standard ein mobiles Kommunikationsgerät in einem aktiven Status, ohne dass bereits eine Verbindung aufgebaut ist bzw. dem Teilnehmer bereits entsprechende Übertragungsressourcen durch das Netz zugewiesen worden sind. Sobald das Gerät sich im connected mode befindet, erfolgt über einen Signalisierungsaustausch mit dem Netz eine Registrierung des Gerätes für die jeweilige Funkzelle, in der sich das Gerät gerade befindet. Die angesprochene Registrierung des Kommunikationsgerätes kann für manche Funkzellen des Systems für das jeweilige Kommunikationsgerät zugelassen sein und für andere wiederum nicht. Das Gerät hat dann nur die Berechtigung, für die zugelassenen Funkzellen eine Registrierung zu erreichen. Es ist dann nur in der Lage, in denjenigen Funkzellen, für die es eine Berechtigung hat, eine Funkverbindung aufzubauen. Dieses Konzept ist als "partial roaming" bekannt. Durch das partial roaming ist es möglich, zwischen unterschiedlichen Teilnehmern des Mobilfunksystems bezüglich ihrer Zugangsrechte zu bestimmten Bereichen eines Mobilfunksystems zu unterscheiden.

Nach der 3GGP-UMTS-Spezifikation TS 24.008, V5.2.0 vom Dezember 2001, Kapitel 4.4 erfolgt der oben beschriebene Registrierungsvorgang durch Kommunikation zwischen dem mobilen Teilnehmer und dem sogenannten Core Network (Kernnetzwerk) des Mobilfunksystems. Im Core Network wird auch die Entscheidung über den Registrierungsantrag des Teilnehmers getroffen. In Mobilfunksystemen unterscheidet man zwischen dem Core Network und dem Radio Access Network. Letzteres wird durch die Funkwellen aussendenden Basisstationen sowie durch Funknetzwerkcontroller (Radio Network Controller) gebildet. Jedem Funknetzwerkcontroller sind dabei mehrere der Basisstationen zugeordnet. Die Funknetzwerkkontroller sind für die Zuteilung der Funkressourcen zu den einzelnen Teilnehmern zuständig. Über das Core Network ist das Radio Access Network mit anderen Telefonnetzen, insbesondere mit Festnetzen verbunden. Das Core Network beinhaltet unter anderem mit den Funknetzwerkcontrollern des Radio Access Networks verbundene Vermittlungszentralen (Mobile Switching Center, MSC).

Wie bereits erwähnt, erfolgt die Registrierung eines mobilen Teilnehmers im connected mode für eine bestimmte Funkzelle des Mobilfunksystems gemäß dem UMTS-Standard durch eine entsprechende Kommunikation des Teilnehmers mit dem Core Network. Das bedeutet, dass Daten über die Berechtigung der einzelnen Teilnehmer für die Nutzung der einzelnen Funkzellen zentral im Core Network des Mobilfunksystems gespeichert werden. Bei einem Registrierungsversuch eines Teilnehmers für eine bestimmte Funkzelle erfolgt diese Kommunikation über die Basisstation der Funkzelle, den zugeordneten Funknetzwerkcontroller und die diesem wiederum hierarchisch übergeordnete Vermittlungseinrichtung MSC.

Weiterhin sieht der oben zitierte Teil des UMTS-Standards vor; dass das Kommunikationsgerät bei einem erfolglosen Registrierungsversuch, also bei einer Zurückweisung der Registrierung durch das Core Network aufgrund mangelnder Berechtigung des Teilnehmers, vom RRC connected mode in den sogenannten idle mode wechselt. Im idle mode ist dem Mobilfunksystem die aktuelle Position des Teilnehmers unbekannt, da die vom Teilnehmer beantragte Registrierung für eine der Funkzellen fehlgeschlagen ist.

Der Erfindung liegt die Aufgabe zu Grunde, ein Verfahren sowie ein Mobilfunksystem anzugeben, bei dem die Registrierung des mobilen Kommunikationsgerätes für einen Funkversorgungsbereich, bspw. eine Funkzelle, eines Mobilfunksystems vereinfacht wird. Diese Aufgabe wird durch ein Verfahren gemäß Patentanspruch 1 sowie ein Mobilfunksystem gemäß Patentanspruch 9 und einen Funknetzwerkkontroller gemäß Anspruch 10 gelöst.

Das erfindungsgemäßen Verfahren zum Registrieren eines mobilen Kommunikationsgerätes für einen Funkversorgungsbereich eines Mobilfunksystems, dessen Funkversorgungsbereichen je eine Basisstation zugeordnet ist, von denen jeweils mehrere einem sie steuernden Funknetzwerkkontroller zugeordnet sind, sieht folgende Schritte vor:
- In einem der Funknetzwerkcontroller werden Daten über die Berechtigung für eine Registrierung des Kommunikationsgeräts für die Funkversorgungsbereiche gespeichert,
- das Kommunikationsgerät beantragt eine Registrierung für einen ersten Funkversorgungsbereich bei diesem Funknetzwerkcontroller,
- und der Funknetzwerkcontroller greift für die Entscheidung über einen Antrag des Kommunikationsgeräts auf Registrierung für einen der Funkversorgungsbereiche auf die gespeicherten Daten zu.

Bei den Funkversorgungsbereichen kann es sich um ganze Funkzellen des Mobilfunksystems handeln also Bereiche, die von jeweils einer Basisstation versorgt werden. Es ist aber auch möglich, dass die Funkversorgungsbereiche nur Teile einer solchen Funkzelle sind, für deren Nutzung das Kommunikationsgerät jeweils eine Berechtigung braucht. Eine Aufteilung einer Funkzelle in unterscheidbare kleinere Einheiten kann bspw. mit Hilfe von gerichteten Antennen der Basisstation erfolgen.

Das erfindungsgemäße Verfahren unterscheidet sich in folgender Weise vom oben zitierten 3GPP-UMTS-Standard. Die Entscheidung über die Registrierung erfolgt innerhalb des Radio Access Networks, konkret durch den Funknetzwerkkontroller, und nicht im Core Network, wie bislang im UMTS-Standard vorgesehen. Dies erfordert das Vorhalten der Daten über die Berechtigung der einzelnen Teilnehmer in demjenigen Funknetzwerkkontroller, der für die Entscheidung zuständig ist. In vorteilhafter Weise wird hierdurch während späterer Registrierungsvorgänge eine Kommunikation zwischen Radio Access Network und Core Network vermieden, was bei der großen Anzahl von Anträgen auf Registrierung für Funkzellen zu einer erheblichen Einsparung bei den über die Schnittstelle zwischen Radio Access Network und Core Network zu übertragenden Daten bedeutet.

Vorteilhafter Weise entscheidet der Funknetzwerkkontroller über die Anträge auf Registrierung ohne Beteiligung von ihm hierarchisch übergeordneten Einheiten des Mobilfunksystems wie z. B. Vermittlungseinrichtungen oder anderen Einheiten des Core Networks.

Nach einer Weiterbildung der Erfindung lehnt der Funknetzwerkkontroller die beantragte Registrierung für den ersten Funkversorgungsbereich ab, da das Kommunikationsgerät zu einer solchen nicht berechtigt ist. Unmittelbar anschließend daran beantragt das Kommunikationsgerät eine Registrierung für einen zweiten Funkversorgungsbereich bei demselben Funknetzwerkkontroller. Diesmal führt der Funknetzwerkkontroller die Registrierung für den zweiten Funkversorgungsbereich durch, weil das Kommunikationsgerät zu dieser berechtigt ist.

Diese Weiterbildung unterscheidet sich vom oben geschilderten 3GPP-UMTS-Standard weiterhin darin, dass nach der Ablehnung der beantragten Registrierung durch den Funknetzwerkkontroller nach dem UMTS-Standard ein Wechsel des Kommunikationsgerätes vom connected mode in den idle mode erfolgt, weitere Registrierungsversuche also unterbleiben. Dem gegenüber sieht die Erfindung vor, dass das Kommunikationsgerät unmittelbar anschließend an die Ablehnung eines ersten Registrierungsversuchs eine weitere Registrierung für einen zweiten Funkversorgungsbereich beantragt. Dies bietet den Vorteil, dass auch nach einem fehlgeschlagenen ersten Registrierungsversuch noch eine erfolgreiche Registrierung für einen anderen Funkversorgungsbereich erfolgen kann, so dass die von den Erfindern der vorliegenden Erfindung als nachteilig erkannte Folge des nach dem 3GPP-Standard vorgesehenen Verfahrens vermieden wird. Wie oben erläutert, besteht diese darin, dass nach einem fehlgeschlagenen Registrierungsversuch durch das Versetzen des Kommunikationsgerätes in den idle mode die derzeitige Position des Teilnehmers dem Mobilfunksystem unbekannt ist. Durch den erfindungsgemäßen erneuten Registrierungsversuch für einen anderen Funkversorgungsbereich ergibt sich in vorteilhafter Weise als Ergebnis, dass das Mobilfunksystem bei Erfolg dieses Registrierungsversuchs über die Position des Kommunikationsgerätes, d.h. über den Funkversorgungsbereich, in dem sich dieses aufhält, informiert ist.

Der erste und der zweite Funkversorgungsbereich können geographisch sich teilweise überlappend oder vollständig überlappend angeordnet sein. Die beiden Funkversorgungssysteme können einem gemeinsamen Mobilfunknetz oder aber auch unterschiedlichen Mobilfunknetzen des Mobilfunksystems zugehörig sein. Dabei wird hier ein Mobilfunknetz als ein Teilbereich des Mobilfunksystems betrachtet, dass einem bestimmten Betreiber (Operator) zugeordnet ist. Bei getrennten Mobilfunknetzen innerhalb des Mobilfunksystems sind die beiden Funkversorgungsbereiche dann unterschiedlichen Netzbetreibern zugeordnet.

Eine unterschiedliche Berechtigung für die Registrierung für die Funkversorgungsbereiche ergibt sich z. B. dadurch, dass ein mobiler Teilnehmer (also der Nutzer des Kommunikationsgeräts) Gebühren für die Nutzung des Netzes an den einen Mobilfunknetzbetreiber entrichtet hat und nicht an den anderen. Dieser Fall kann aber auch vorliegen, wenn die beiden Netzbetreiber in der Weise kooperieren, dass ihre Netze von Kunden beider Netzbetreiber in bestimmten Funkversorgungsbereichen des gesamten Mobilfunksystems gemeinsam benutzt werden dürfen, in anderen Funkversorgungsbereichen jedoch nicht. Dann besteht für einen Teilnehmer, der mit nur einem der Mobilfunkbetreiber einen Vertrag hat, keine Möglichkeit, festzustellen, ob er sich in einem Funkversorgungsbereich des jeweils anderen Netzbetreibers befindet, in dem er zu einer Registrierung berechtigt ist, oder nicht.

Es sind auch Fälle möglich, in denen dem mobilen Teilnehmer bestimmte Funkzellen "seines" eigenen Netzbetreibers nicht zugänglich sind. Auch in diesen Fällen ist die Erfindung anwendbar. Dann sind der erste und der zweite Funkversorgungsbereich demselben Mobilfunknetz zugehörig und das erfindungsgemäße Mobilfunksystem muss keine weiteren Mobilfunknetze aufweisen.

Gemäß einer vorteilhaften Weiterbildung der Erfindung wird das Kommunikationsgerät bei seiner Inbetriebnahme bereits durch denselben Funknetzwerkcontroller für einen der Funkversorgungsbereiche registriert, der auch nachfolgend die Entscheidung über spätere Anträge des Kommunikationsgerätes auf Registrierung für andere Funkversorgungsbereiche trifft. Dies hat den Vorteil, dass die Daten, die über die Berechtigung für die einzelnen Registrierungen Auskunft geben, nur einmal beim betreffenden Funknetzwerkcontroller hinterlegt werden müssen, nämlich bei der Inbetriebnahme des Kommunikationsgerätes (also dem Einschalten der Leistungsversorgung), und dass über die späteren Registrierungsanträge des Kommunikationsgerätes für andere Funkversorgungsbereiche von dem Funknetzwerkkontroller ohne die Anforderung weiterer Daten entschieden werden kann.

Nach einer anderen vorteilhaften Weiterbildung der Erfindung werden bei Ablehnung der Registrierung für den ersten Funkversorgungsbereich durch den Funknetzwerkkontroller von diesem Angaben über wenigstens einen Funkversorgungsbereich an das Kommunikationsgerät übermittelt, für den das Kommunikationsgerät zu einer Registrierung berechtigt ist. Dies hat den Vorteil, dass das mobile Kommunikationsgerät bei seinem nachfolgenden Registrierungsantrag auf diese Daten zurückgreifen kann. Es kann zielgerichtet eine Registrierung für einen weiteren Funkversorgungsbereich beantragen, für den es die entsprechende Berechtigung besitzt. Auf diese Weise ist nach einem einzigen fehlgeschlagenen Registrierungsversuch (für den ersten Funkversorgungsbereich) sicher gestellt, dass der zweite Registrierungsversuch nicht ebenfalls wegen mangelnder Berechtigung abgewiesen wird. Dies führt zu einer schnelleren Registrierung des Kommunikationsgerätes im Mobilfunksystem. Die vom Funknetzwerkkontroller an das Kommunikationsgerät übermittelten Angaben beinhalten somit bspw. Angaben darüber, dass das Kommunikationsgerät für eine Registrierung für den zweiten Funkversorgungsbereich berechtigt ist.

Nach einer weiteren vorteilhaften Weiterbildung der Erfindung speichert das Kommunikationsgerät eine Information über diejenigen Funkversorgungsbereiche, für die seine Registrierung durch den Funknetzwerkkontroller bereits abgelehnt wurde. Das Kommunikationsgerät berücksichtigt die gespeicherten Informationen bei der Auswahl eines Funkversorgungsbereiches, für den zu einem späteren Zeitpunkt eine Registrierung beantragt werden soll. Auf diese Weise kann vorteilhafter Weise vermieden werden, dass das Kommunikationsgerät mehrmals vergeblich eine Registrierung für denselben Funkversorgungsbereich beantragt, für den es zu einer Registrierung nicht berechtigt ist.

Vorteilhafter Weise berücksichtigt das Kommunikationsgerät die gespeicherten Informationen über abgelehnte Anträge auf Registrierung nur während eines festgelegten Zeitraums bei späteren Anträgen auf Registrierung. Dies hat den Vorteil, dass zwischenzeitlich eingetretene Änderungen derjenigen Funkversorgungsbereiche, für die das Kommunikationsgerät eine bzw. keine Berechtigung zur Registrierung hat, Berücksichtigungen finden können. Der festgelegte Zeitraum sollte vorteilhafter Weise höchstens von nur wenigen Stunden Dauer sein (z. B.1 bis 3 Stunden), so dass eine Aktualisierung der Berechtigung des Kommunikationsgerätes für die Registrierung in bestimmten Funkversorgungsbereichen möglichst zeitnah berücksichtigt werden kann.

Weiterhin vorteilhaft ist es, wenn der Funknetzwerkkontroller der über die Registrierungsanträge entscheidet, dem Kommunikationsgerät signalisiert, für welchen Zeitraum es die gespeicherten Informationen über abgelehnte Anträge auf Registrierung berücksichtigen soll. Dies ermöglicht eine dynamische Bestimmung der Länge des Zeitraums durch den Funknetzwerkkontroller.

Bei dem mobilen Kommunikationsgerät kann es sich bspw. um ein mobiles Endgerät in Form eines tragbaren Telefons handeln. Das Telefon kann selbstverständlich auch fest in einem beweglichen Verkehrsmittel, bspw. einem Kraftfahrzeug installiert sein. Weiterhin kommen beliebige Arten von mobilen Kommunikationsgeräten in Betracht, die in der Lage sind, mit dem Mobilfunksystem zu kommunizieren, bspw. mit entsprechenden Modems ausgestattete Computer.

Bei dem Mobilfunksystem kann es sich um ein solches der schurlosen Telefonie handeln, wie bspw. das DECT-System. Daneben kommen beliebige andere Mobilfunkstandards in Betracht, nicht nur der eingangs erwähnte GSM- und 3GPP-Standard.

Die Erfindung wird im Folgenden anhand von in den Figuren dargestellten Ausführungsbeispielen näher erläutert.

Es zeigen:
- Fig.1: ein erfindungsgemäßes Mobilfunksystem mit mehreren Funkzellen,
- Fig. 2: die Kommunikation zwischen einem mobilen Kommunikationsgerät und einem Funknetzwerkcontroller für den Fall der Ablehnung eines Registrierungsantrags und
- Fig. 3: die Kommunikation zwischen dem Kommunikationsgerät und dem Funknetzwerkcontroller für den Fall eines erfolgreichen Registrierungsantrags.

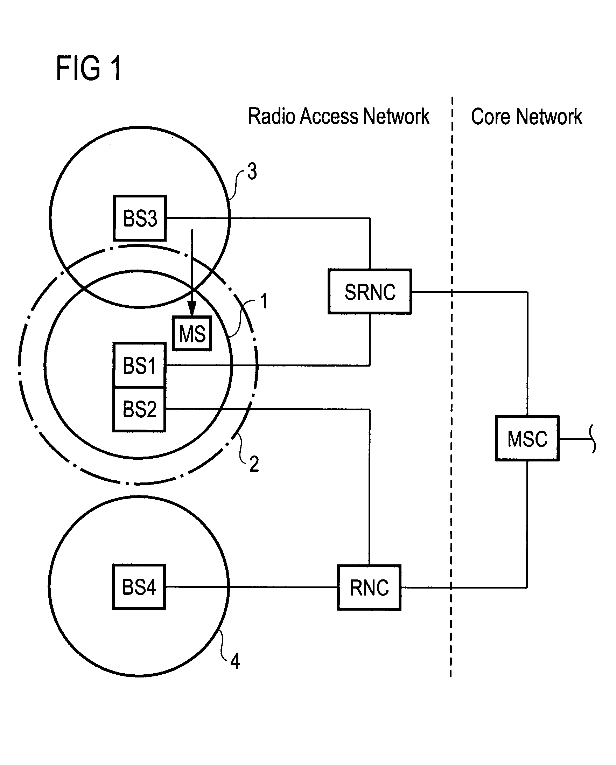

Fig. 1 zeigt einen Ausschnitt eines erfindungsgemäßen Mobilfunksystems. Das Mobilfunksystem besteht aus zwei Mobilfunknetzen, die räumlich überlagert sind und jeweils einem unterschiedlichen Netzbetreiber zugeordnet sind. Jedes der beiden Netze weist eine Vielzahl von benachbarten Funkversorgungsbereichen in Form von Funkzellen auf, die durch jeweils eine in ihrem Zentrum angeordnete Basisstation versorgt werden. Es sind lediglich drei Basisstationen BS1, BS3 und BS4 des ersten Mobilfunknetzes und eine Basisstation BS2 des zweiten Mobilfunknetzes dargestellt. Der ersten Basisstation BS1 ist die Funkzelle 1, der zweiten Basisstation BS2 die Funkzelle 2, der dritten Basisstation BS3 die Funkzelle 3 und der vierten Basisstation BS4 die Funkzelle 4 zugeordnet. Die Funkzelle 2 der zweiten Basisstation BS2 weist eine größere Ausdehnung auf als die Funkzelle 1 der ersten Basisstation BS1 und schließt diese vollständig ein. Weiterhin zeigt Fig. 1 zwei Funknetzwerkcontroller RNC, SRNC, von denen das Mobilfunksystem in Wirklichkeit eine große Anzahl aufweist. Jeder dieser Funknetzwerkcontroller RNC, SRNC ist mit mehreren der Basisstationen BS1 ... BS4 verbunden. Im vorliegenden Fall ist der obere Funknetzwerkcontroller SRNC in Fig. 1 unter anderem mit der ersten Basisstation BS1 und der dritten Basisstation BS3 verbunden, während der untere Funknetzwerkcontroller RNC in Fig. 1 unter anderem mit der zweiten Basisstation BS2 und der vierten Basisstation BS4 verbunden ist. Jeweils mehrere der Funknetzwerkcontroller RNC, SRNC sind mit einer mobilen Vermittlungseinrichtung MSC verbunden, die mit weiteren in der Fig. 1 nicht dargestellten Einheiten das Core Network des Mobilfunksystems bilden. Dagegen bilden die Basisstationen BS1 ... BS4 zusammen mit den Funknetzwerkcontrollern RNC, SRNC das Radio Access Network des Mobilfunksystems.

Die beiden Mobilfunknetze des Mobilfunksystems haben jeweils eigene Basisstationen BS1..4, jedoch gemeinsame Funknetzcontroller RNC, SRNC und Vermittlungseinrichtungen MSC. Es handelt sich um ein Mobilfunksystem nach dem oben geschilderten UMTS-Standard, die Erfindung ist jedoch auch auf beliebig andere Standards anwendbar.

Über die Funknetzwerkcontroller RNC, SRNC erfolgt eine Ressourcenzuteilung an mobile Kommunikationsgeräte. In Fig. 1 ist lediglich ein mobiles Funkkommunikationsgerät in Form einer Mobilstation MS in der Funkzelle 1 eingezeichnet. Über die ihm zugewiesene Verbindung kann die Mobilstation MS im Bedarfsfall über die Basisstation BS1, in deren Funkzelle 1 sie sich befindet, sowie über den mit dieser Basisstation BS1 verbundenen Funknetzwerkkontroller SRNC und die mobile Vermittlungseinrichtung MSC sowie ggf. weitere Einheiten des Core Networks mit anderen Teilnehmern des Mobilfunksystems kommunizieren.

Im hier interessierenden Fall jedoch besteht noch keine Verbindung der Mobilstation MS zu einem anderen Teilnehmer und es sind hierfür auch noch keine Funkressourcen in Form von Frequenzen, Zeitschlitzen und/oder Spreizcodes (je nach Multiplexverfahren des jeweiligen Mobilfunksystems) zugewiesen worden. Es wird angenommen, dass die Mobilstation MS berechtigt ist, für die Funkzelle 2 der zweiten Basisstation BS2, die dem Mobilfunknetz des zweiten Netzbetreibers angehört, durch eine entsprechende Anmeldung registriert zu werden und ggf. Ressourcen zugewiesen zu bekommen. Die Mobilstation MS soll jedoch nicht dazu berechtigt sein, eine entsprechende Registrierung für die Funkzelle 1 der ersten Basisstation BS1 zu erhalten, die dem Mobilfunknetz des ersten Netzbetreibers zugeordnet ist. Die Berechtigung für die Registrierung kann bspw. von vertraglichen Vereinbarungen zwischen den beiden Netzbetreibern abhängen.

Bei dem im Folgenden beschriebenen Registrierungsverfahren wird unterstellt, dass die Mobilstation MS nicht weiß, für welche Funkzellen 1, 2 welchen Netzbetreibers sie eine Berechtigung zur Registrierung besitzt. Es wird angenommen, dass die Mobilstation MS sich zunächst in der Funkzelle der dritten Basisstation BS3 befand und dort in Betrieb genommen wurde. Sie beantragte dort eine Registrierung für die Funkzelle 3 beim für die dritte Basisstation BS3 zuständigen Funknetzwerkcontroller SRNC. Der Funknetzwerkcontroller SRNC verfügt über aus dem Core Network heruntergelandenen Daten, die darüber Auskunft geben, für welche der Funkzellen 1...4 des Mobilfunksystems die Mobilstation MS berechtigt ist, eine Registrierung zu beantragen und Funkressourcen zu beanspruchen. Im vorliegenden Fall wird angenommen, dass eine solche Berechtigung der Mobilstation MS für die Funkzelle 3 vorlag. Weiterhin wird angenommen, dass sich die Mobilstation MS anschließend im sogenannten RRC connected mode befindet. In diesem Zustand weiß das Mobilfunksystem aufgrund der vorangegangen Registrierung der Mobilstation MS für die Funkzelle 3, wo sich die Mobilstation MS aufhält. Es wird jedoch keine Kommunikationsverbindung zwischen der Mobilstation MS und einem anderen Teilnehmer aufgebaut.

Gemäß Fig. 1 (siehe Pfeil) wandert die Mobilstation MS nun von der Funkzelle 3 in den gemeinsamen Versorgungsbereich der Funkzelle 1 der ersten Basisstation BS1 und der Funkzelle 2 der zweiten Basisstation BS2. Zunächst beantragt die Mobilstation MS nun beim Mobilfunksystem eine Registrierung für die erste Funkzelle 1. Ein entsprechendes Signal der Mobilstation MS wird über die erste Basisstation BS1 zum Funknetzwerkcontroller SRNC weitergeleitet, der durch Vergleich mit in ihm gespeicherten Daten feststellt, dass die Mobilstation MS zu der gewünschten Registrierung nicht berechtigt ist. Dies teilt der Funknetzwerkcontroller SRNC über die erste Basisstation BS1 der Mobilstation MS mit.

Unmittelbar anschließend daran versucht die Mobilstation MS eine Registrierung für die zweite Funkzelle 2 zu erreichen. In diesem Fall wird das entsprechende Signal, mit dem die Registrierung beantragt wird, über die zweite Basisstation BS2 und den zugehörigen Funknetzwerkcontroller RNC sowie die mobile Schaltungseinrichtung MSC zum Funknetzwerkcontroller SRNC übertragen, in dem die für diese Mobilstation MS relevanten Berechtigungsdaten seit der ursprünglichen Registrierung in der dritten Funkzelle 3 gespeichert sind. Dieser Funknetzwerkcontroller entscheidet aufgrund der in ihm gespeicherten Daten, dass eine Berechtigung für die gewünschte Registrierung für die zweite Funkzelle 2 vorliegt, nimmt die entsprechende Registrierung vor und übermittelt ein entsprechendes Bestätigungssignal über die mobile Vermittlungseinrichtung MSC, den anderen

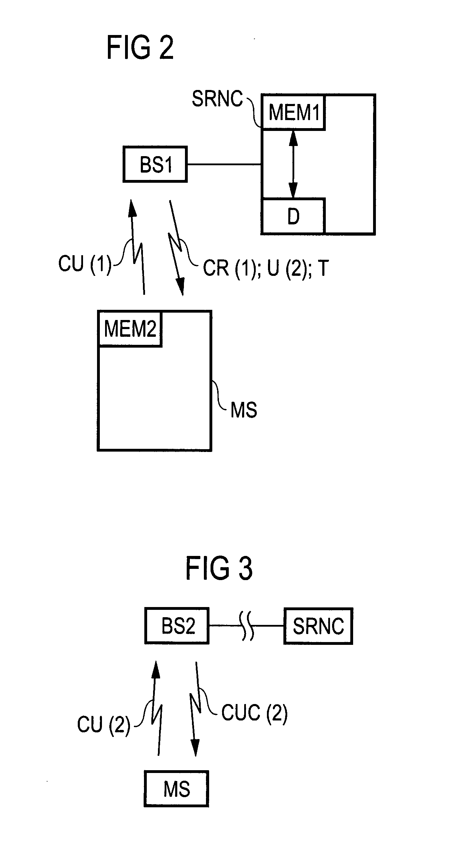

In Fig. 2 ist die Kommunikation zwischen Mobilstation MS und dem Funknetzwerkcontroller SRNC für den ersten Registrierungsversuch bezüglich der ersten Funkzelle 1 aus Figur 1 dargestellt. Die Mobilstation MS übermittelt zunächst als Registrierungsantrag ein Cell Update Signal CU (1) über die erste Basisstation BS1 an den Funknetzwerkcontroller SRNC. Dieser weist den Registrierungsantrag mit einer Cell Reject Nachricht CR (1) zurück. Der Funknetzwerkcontroller SRNC weist einen ersten Speicher MEM auf, indem die oben erwähnten Daten über die Berechtigung und/oder die Nichtberechtigung der jeweiligen Mobilstation MS für eine Registrierung für jede der Funkzellen des Mobilfunksystems gespeichert sind. Weiterhin weist der Funknetzwerkkontroller SRNC eine Entscheidungseinheit D auf, die mit dem Speicher MEM1 verbunden ist und für die Entscheidung über die Registrierungsanträge der mobilen Teilnehmer zuständig ist.

Die Mobilstation MS weist ebenfalls einen Speicher MEM2 auf, indem sie Kennungen von Funkzellen speichert, für die sie bereits einen erfolglosen Registrierungsversuch beim Funknetzwerkcontroller SRNC unternommen hat. Im vorliegenden Fall speichert die Mobilstation MS also nach Erhalt der Cell Reject Nachricht CR (1) eine Kennung der Funkzelle 1. Auf diese Weise wird vermieden, dass die Mobilstation MS zu einem späteren Zeitpunkt erneut versucht, eine Registrierung für diese Funkzelle zu beantragen, für die sie keine Berechtigung hat. Zusätzlich übermittelt der Funknetzwerkcontroller SRNC eine Zeitdauer T mit der Cell Reject Nachricht (1) an die Mobilstation MS. Die Mobilstation MS speichert diese Zeitdauer T ebenfalls in ihrem Speicher MEM2. Die Information über einen abgelehnten Registrierungsantrag wird im Speicher MEM2 der Mobilstation MS nur für die vom Funknetzwerkcontroller SRNC mitgeteilte Zeitdauer T gespeichert. Anschließend wird der jeweilige Eintrag gelöscht, so dass dann wieder Registrierungsanträge der Mobilstation MS für die betroffene Funkzelle erfolgen können.

In Fig. 2 ist außerdem dargestellt, dass der Funknetzwerkcontroller SRNC der Mobilstation MS zusammen mit der Cell Reject Nachricht CR(1) eine Information U(2) übermittelt kann, die Angaben weitere Funkzellen enthalten, für die laut den im Funknetzwerkcontroller SRNC gespeicherten Berechtigungsdaten die Mobilstation MS berechtigt ist, eine Registrierung zu erhalten. Diese Information U(2) kann u.U. auch nur diejenigen Funkzellen betreffen, in deren Empfangsbereich sich die Mobilstation MS derzeit befindet. Beim vorliegenden Ausführungsbeispiel betrifft diese Information U(2) die zweite Funkzelle 2. Die Mobilstation MS ist aufgrund dieser Information U(2) in der Lage, beim zweiten Registrierungsversuch zielgerichtet die zweite Funkzelle 2 auszuwählen, ohne ggf. entsprechende Versuche für weitere Funkzellen zu unternehmen, für die sie möglicherweise keine Registrierungsberechtigung besitzt.

Fig. 3 zeigt die Kommunikation zwischen der Mobilstation MS und dem Funknetzwerkcontroller SRNC aus Fig. 1 für den Fall der erfolgreichen Registrierung für die zweite Funkzelle 2. Diese Kommunikation erfolgt unmittelbar im Anschluss an die in Fig. 2 dargestellten Kommunikation. Zunächst überträgt die Mobilstation MS ein Cell Update Signal CU(2) über die zweite Basisstation BS2 und auf dem weiteren anhand von Fig. 1 erläuterten Weg über die Vermittlungseinrichtung MSC zum Funknetzwerkcontroller SRNC. Dieser stellt aufgrund der in ihm gespeicherten Berechtigungsdaten fest, dass die Mobilstation MS zu der beantragten Registrierung berechtigt ist. Der Funknetzwerkcontroller SRNC nimmt die beantragte Registrierung vor und signalisiert dies über einen Cell Update Confirm Signal CUC(2) der Mobilstation MS.

## Patentansprüche

1. Verfahren zum Registrieren eines mobilen Kommunikationsgerätes (MS) für einen Funkversorgungsbereich eines Mobilfunksystems,
- das Funkversorgungsbereiche (1..4) aufweist, die je einer Basisstation (BSi) zugeordnet sind,
- wobei jeweils mehrere der Basisstationen einem sie steuernden Funknetzwerkcontroller (SRNC, RNC) zugeordnet sind,
bei dem
- in einem der Funknetzwerkcontroller (SRNC) Daten über die Berechtigung für eine Registrierung des Kommunikationsgeräts (MS) für die Funkversorgungsbereiche gespeichert werden,
- das Kommunikationsgerät (MS) eine Registrierung für einen ersten Funkversorgungsbereich (1) bei diesem Funknetzwerkcontroller (SRNC) beantragt,
- und der Funknetzwerkcontroller (SRNC) für die Entscheidung über einen Antrag des Kommunikationsgeräts auf Registrierung für einen der Funkversorgungsbereiche auf die gespeicherten Daten zugreift.

2. Verfahren nach Anspruch 1, bei dem
- der Funknetzwerkcontroller (SRNC) die beantragte Registrierung ablehnt, weil das Kommunikationsgerät zu einer solchen nicht berechtigt ist,
- das Kommunikationsgerät unmittelbar anschließend daran eine Registrierung für einen zweiten Funkversorgungsbereich (2) bei dem Funknetzwerkcontroller beantragt,
- und der Funknetzwerkcontroller die Registrierung für den zweiten Funkversorgungsbereich durchführt, weil das Kommunikationsgerät zu dieser berechtigt ist.

3. Verfahren nach Anspruch 1 oder 2, bei dem
- das Kommunikationsgerät (MS) bei seiner Inbetriebnahme durch einen der Funknetzwerkcontroller (SRNC) für einen der Funkversorgungsbereiche (3) registriert wird
- und dieser Funknetzwerkcontroller (SRNC) auch über nachfolgende Anträge des Kommunikationsgerätes auf Registrierung für andere Funkversorgungsbereiche (1, 2) entscheidet.

4. Verfahren nach einem der vorstehenenden Ansprüche,
bei dem bei Ablehnung der Registrierung für den ersten Funkversorgungsbereich (1) durch den Funknetzwerkcontroller (SRNC) von diesem Angaben über wenigstens einen Funkversorgungsbereich an das Kommunikationsgerät (MS) übermittelt werden, für den das Kommunikationsgerät zu einer Registrierung berechtigt ist.

5. Verfahren nach einem der vorstehenden Ansprüche, bei dem
- das Kommunikationsgerät (MS) eine Information über diejenigen Funkversorgungsbereiche (1) speichert, für die seine Registrierung durch den Funknetzwerkcontroller bereits abgelehnt wurde,
- und das Kommunikationsgerät die gespeicherten Informationen bei der Auswahl eines Funkversorgungsbereiches, für den eine Registrierung beantragt werden soll, berücksichtigt.

6. Verfahren nach Anspruch 5,
bei dem das Kommunikationsgerät (MS) die gespeicherten Informationen über abgelehnte Anträge auf Registrierung bei späteren Anträgen auf Registrierung nur während eines festgelegten Zeitraumes (T) berücksichtigt.

7. Verfahren nach Anspruch 6,
bei dem der Funknetzwerkcontroller (SRNC) dem Kommunikationsgerät (MS) signalisiert, für welchen Zeitraum (T) es die gespeicherten Informationen über abgelehnte Anträge auf Registrierung berücksichtigen soll.

8. Verfahren nach einem der vorstehenden Ansprüche,
bei dem der erste und zweite Funkversorgungsbereich (1, 2) unterschiedlichen Mobilfunknetzen des Mobilfunksystems angehören, die einander räumlich überlagert sind.

9. Mobilfunksystem
- das Funkversorgungsbereiche (1..4) aufweist, die je einer Basisstation (BSi) zugeordnet sind,
- bei dem jeweils mehrere der Basisstationen einem sie steuernden Funknetzwerkcontroller (SRNC, RNC) zugeordnet sind,
- bei dem einer der Funknetzwerkcontroller (SRNC) für die Entscheidung über Registrierungsanträge eines mobilen Kommunikationsgerätes (MS) für einzelne der Funkversorgungsbereiche eine Speichereinheit (MEM1) und eine Entscheidungseinheit (D) aufweist,
- wobei die Speichereinheit (MEM1) zum Speichern von Daten über die Berechtigung für eine Registrierung des Kommunikationsgeräts (MS) für die Funkversorgungsbereiche (1..4) dient,
- wobei die Entscheidungseinheit (D) für das Treffen einer Entscheidung über einen Antrag des Kommunikationsgeräts auf Registrierung für einen der Funkversorgungsbereiche dient,
- und wobei die Entscheidungseinheit mit der Speichereinheit verbunden ist, um beim Treffen der Entscheidung auf die gespeicherten Daten zugreifen zu können.

10. Funknetzwerkcontroller (SRNC) zur Steuerung mehrerer Basistationen (BS1..4) eines Mobilfunksystems, denen jeweils ein Funkversorgungsbereich (1..4) zugeordnet ist,
- der eine Speichereinheit (MEM1) aufweist zum Speichern von Daten über die Berechtigung für eine Registrierung des Kommunikationsgeräts (MS) für die Funkversorgungsbereiche (1..4),
- der eine Entscheidungseinheit (D) aufweist für das Treffen einer Entscheidung über einen Antrag des Kommunikationsgeräts auf Registrierung für einen der Funkversorgungsbereiche
- und dessen Entscheidungseinheit mit der Speichereinheit verbunden ist, um beim Treffen der Entscheidung auf die gespeicherten Daten zugreifen zu können.
